# FASCICULE DE BREVET EUROPEEN

(11) **EP 1 217 240 B1**
(45) Date de publication et mention de la délivrance du brevet: **28.09.2005**
(21) Numéro de dépôt: 01402958.1
(22) Date de dépôt: 19.11.2001
(51) Int. Cl.: F16D 23/02

(54) **Procédé de fabrication d'une bague de synchronisation de boîte de vitesses, notamment pour véhicule automobile et bague de synchronisation obtenue par un tel procédé**
Verfahren zur Herstellung eines Getriebesynchronisierringes, insbesondere zum Gebrauch in Fahrzeugen und nach diesem Verfahren hergestellter Synchronisierring
Manufacturing method for gearbox synchronizer ring especially for use in a motor vehicle, and synchronizer ring obtained with this method

(30) Priorité: 22.12.2000 FR 0016991
(43) Date de publication de la demande: 26.06.2002
(73) Titulaire: Valeo Matériaux de Friction, 87020 Limoges cedex 9 (FR)
(72) Inventeur: Boule, Philippe, Leeds, LS17-8NF (GB); Pantier, Philippe, 87640 Razes (FR); Rommeru, Cécile, 87280 Limoges (FR)
(74) Mandataire: Lemaire, Marc

(56) Documents cités:
- FR-A- 2 609 138
- FR-A- 2 760 504
- US-A- 4 267 912
- US-A- 5 478 642

## Description

La présente invention concerne une bague de synchronisation de boîte de vitesses notamment pour véhicule automobile.

L'invention se rapporte plus particulièrement a un procédé de fabrication d'une telle bague appartenant à un synchroniseur. Un procédé selon le préambule de la revendication 1 est connu de US-A-4,267,912.

Plus précisément une boîte de vitesses classique pour véhicule automobile comporte, à l'intérieur d'un carter rempli d'huile, au moins un arbre primaire, relié par un embrayage au moteur à combustion interne du véhicule automobile, et un arbre secondaire relié aux roues motrices du véhicule automobile.

Le carter porte des paliers pour montage à rotation de ces arbres portant chacun des pignons respectivement primaires et secondaires. Les pignons primaires sont par exemple solidaires de l'arbre primaire, tandis que les pignons secondaires sont montés fous sur l'arbre secondaire et comportent des surfaces de portée de frottement tronconiques de synchronisation. Les pignons fous sont de manière connue à verrouillage par des synchroniseurs comme décrit par exemple dans le document FR-A-2 609 138 auquel on se reportera pour plus de précisions.

On effectue un changement de rapport de transmission de mouvement en mettant en prise l'un des pignons primaires avec son pignon secondaire associé en fonction des conditions variables de résistance à l'avancement du véhicule automobile. Ceci est réalisé en déplaçant de manière manuelle ou automatique le synchroniseur concerné pour verrouiller le pignon secondaire en le rendant solidaire en rotation de l'arbre secondaire.

Pour ce faire le synchroniseur comporte au moins une bague de synchronisation dotée d'au moins une surface de portée de frottement tronconique susceptible de coopérer par friction avec une surface de portée de frottement tronconique complémentaire appartenant au pignon fou pour formation d'un accouplement conique.

L'accouplement conique travaille dans l'huile du carter de la boîte de vitesses et produit par friction le synchronisme c'est à dire l'entraînement en rotation du pignon fou en vue de l'engagement du rapport de transmission correspondant. Bien entendu les pignons fous en variante sont portés par l'arbre primaire et les pignons fixe par l'arbre secondaire. Le synchroniseur comporte également un moyeu lié en rotation à l'arbre secondaire- primaire concerné par une liaison à cannelures. Sur ce moyeu peut coulisser axialement un baladeur doté intérieurement de dents adaptées à venir en prise avec des dents complémentaires, que présentent la bague de synchronisation et le pignon fou adjacent. Les dents du baladeur viennent en prise avec celles du pignon fou pour un crabotage seulement après la synchronisation. Le plus souvent deux bagues de synchronisation sont disposées de part et d'autre du baladeur car le synchroniseur est monté entre deux pignons fous.

Le baladeur est déplaçable à l'aide d'un levier, tel qu'une fourchette, actionné par une tringlerie reliée au levier de changement de vitesses lorsque la boîte de vitesses est à commande manuelle ou à l'aide d'actionneurs, par exemple du type électromécanique, pilotés par un bloc électronique de calcul et de commande recevant des informations provenant de capteurs lorsque la boîte de vitesses est automatisée ou robotisée comme par exemple dans le document FR-A-2 609 138 précité.

Les actionneurs sont, dans un mode de réalisation, régulés en vitesse.

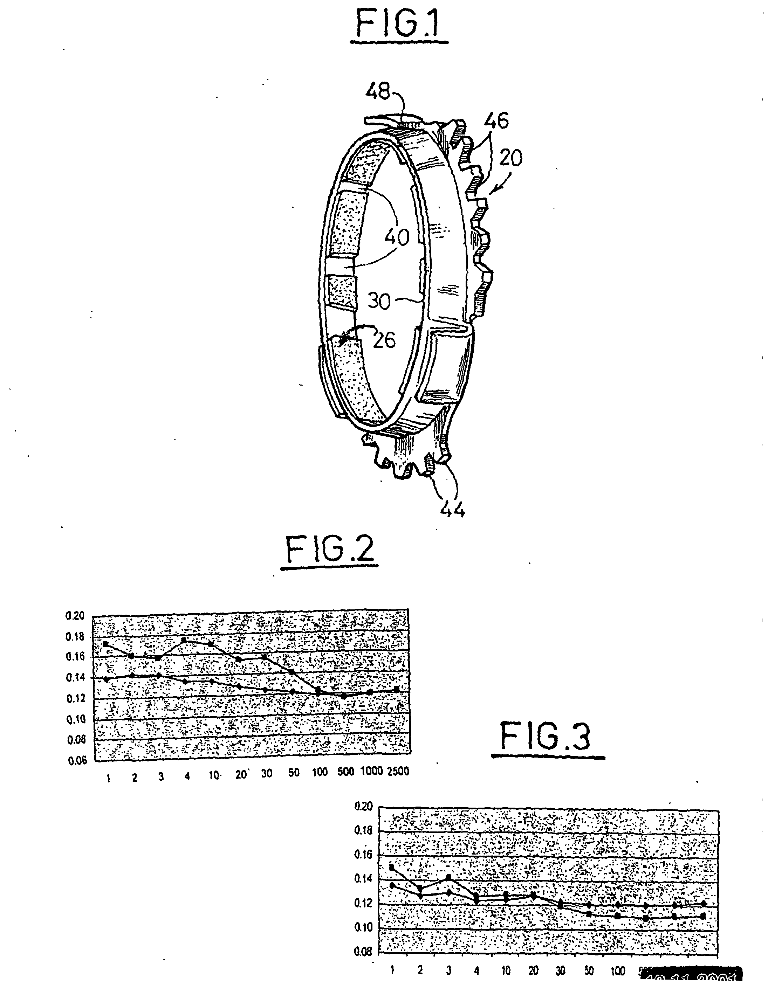

La figure 1 à titre d'exemple représente en perspective une bague de synchronisation décrite dans le document FR-A-2 751 712.

Cette bague 20 comporte un corps métallique 30 de forme générale tronconique doté intérieurement de manière précitée d'une surface tronconique de portée de frottement 26, ici concave.

Ce corps est donc délimité par une face latérale conique externe et par une face latérale conique interne revêtue d'une couche de matériau de frottement dont la surface périphérique interne tronconique constitue la surface de portée de frottement 26, aussi appelée cône de friction, destinée à coopérer avec une surface tronconique convexe complémentaire agencée sur le pignon fou.

Le matériau de frottement est moulable et est adapté à travailler dans l'huile. La couche de ce matériau de frottement est par exemple réalisée par surmoulage sur le cops métallique de la bague 20 La surface 26 comporte une série de rainures 40 d'orientation axiale avantageusement réalisées de matière avec le matériau de frottement.

La bague 20 présente également une collerette d'entraînement dont le bord périphérique 44 externe comporte des dents 46 susceptibles de coopérer avec des dents complémentaires appartenant au baladeur du synchroniseur concerné. La bague 20 comporte également des pattes axiales 48 formants des bossages d'appui et de positionnement axial de la bague de synchronisation.

En variante la bague de synchronisation peut être à double cône de friction ou à cône extérieur de friction comme illustré respectivement dans les figures 7 à 10 et la figure 11 du document FR-A-2 751 712 précité dans lequel le corps de la bague de synchronisation est réalisé par formage d'un flan de tôle.

Le corps de la bague est en variante en acier fritté recouvert de molybdène ou en variante en laiton ou en variante en laiton recouvert intérieurement d'un matériau de frottement à base de papier ou de carbone convenant bien à un frottement dans l'huile.

Dans tous les cas la bague de synchronisation est dotée extérieurement et/ou intérieurement d'une surface de portée de frottement tronconique, appelée de manière usuelle cône de friction, appartenant à une couche de matériau de frottement solidaire d'un corps et adapté à travailler dans l'huile.

On constate lorsque la bague de synchronisation est neuve des difficultés lors du déplacement de celle-ci. Ainsi lorsque la boîte de vitesses est à commande manuelle le conducteur dans les premiers kilomètres de la durée de vie du véhicule automobile a des sensations désagréables lorsqu'il manoeuvre le levier de changement de vitesses pour changer de rapport de transmission. De telles sensations, qui disparaissent par la suite, sont un motif de plainte ; le conducteur n'étant pas satisfait.

La présente invention a pour objet de pallier cet inconvénient de manière simple et économique.

C'est donc un objet de l'invention d'améliorer le déplacement de la bague de synchronisation lors des premiers kilomètres du véhicule automobile.

Suivant l'invention un procédé de fabrication d'une bague de synchronisation du type sus - indiqué est défini dans la revendication 1.

Dans une forme de réalisation la surface de portée de frottement tronconique de la bague de synchronisation en

final est mise en prise, durant un temps spécifique et sous une pression fonction de la pression que subit par la suite en fonctionnement la dite surface de frottement lorsque qu'elle est montée dans la boîte de vitesses, avec une surface de portée complémentaire appartenant à une pièce chaude portée à une température spécifique.

Grâce à l'invention on obtient un bon déplacement de la bague de synchronisation dès les premiers kilomètres du véhicule automobile et ce de manière confortable pour les passagers du véhicule automobile, notamment le conducteur de ce véhicule, qui ainsi peut passer de manière agréable les vitesses.

Grâce au procédé selon l'invention en fonctionnement on obtient dès les premiers kilomètres du véhicule automobile une bonne interface entre la surface de portée de frottement tronconique de la bague de synchronisation et sa surface complémentaire de portée de frottement tronconique appartenant par exemple au pignon fou adjacent et ce sans pic de charge particulièrement à la fin de la phase de synchronisation quand la vitesse différentielle est voisine de zéro.

Lorsque la boîte de vitesses est automatisée ou robotisée on peut diminuer la puissance du ou des actionneurs car le déplacement de la bague de synchronisation est réalisé avec un moindre effort dès les premiers kilomètres de la durée de vie du véhicule.

Grâce à l'invention on réduit les coûts car on supprime l'opération finale de traitement de surface de la dite surface de portée de frottement tronconique.

L'invention permet donc d'éviter un rodage de la surface de portée de frottement tronconique de la bague de synchronisation. et permet d'obtenir pour cette surface un coefficient de friction statique globalement égale à son coefficient de friction dynamique.

Le procédé selon l'invention tient compte des conditions d'utilisation de la bague de synchronisation et donc de la phase de synchronisation en sorte que la bague n'est pas endommagée ou détruite.

Suivant une autre une autre caractéristique de l'invention une bague de synchronisation de boîte de vitesses robotisée, notamment pour véhicule automobile, dotée extérieurement et/ou intérieurement d'une surface de portée de frottement tronconique, est caractérisée en ce qu'elle est obtenu par le procédé de fabrication selon l'invention et en ce qu'elle est adaptée à être déplacée par un actionneur piloté par un bloc électronique de commande et de calcul.

Grâce à l'invention on peut diminuer de manière précitée la puissance de ou des actionneurs de manière précitée.

La description qui va suivre illustre l'invention en regard des dessins annexés dans lesquels :
- la figure 1 est une vue en perspective d'une bague de synchronisation de l'art antérieur ;
- les figures 2 et 3 sont des graphiques montrant les courbes caractéristiques des coefficients de friction respectivement statique et dynamique de la surface de portée de frottement tronconique de la bague de synchronisation respectivement avant et après le traitement thermique selon l'invention.

La bague de synchronisation 20 de boîte de vitesses pour véhicule automobile illustrée à la figure 1 comporte de manière précitée une surface de portée de frottement tronconique 26, qui présente lorsqu'elle est montée dans la boîte de vitesse au début de la durée de vie du véhicule automobile un coefficient de friction statique différent de son coefficient de friction dynamique.

Plus précisément lors d'un changement de rapport de la boîte de vitesses il se produit de manière précitée une phase de synchronisation lors de laquelle il y a déplacement dans l'huile de la bague de synchronisation au contact de sa contre - pièce, usuellement le pignon fou adjacent, et donc intervention d'un coefficient de friction statique et d'un coefficient de friction dynamique.

Ces coefficients dépendent de paramètres, notamment de la surface complémentaire de portée de frottement avec laquelle est admise à coopérer ladite surface de la bague de synchronisation. Ici le coefficient de friction dynamique correspond au coefficient de friction que l'on mesure dans la première partie de la phase de synchronisation lorsque les vitesses de rotation relatives entre la bague de synchronisation et sa contre - pièce sont encore élevées, tandis que le coefficient de friction statique est mesuré à la fin de la phase de synchronisation lorsque les vitesses de rotation relatives entre ces deux pièces sont faibles

Dans les figures 2 et 3 on voit les courbes caractéristiques de ces coefficients de friction dans l'huile avec en abscisse la valeur des coefficients de frottement et en ordonnée le nombre de cycles de synchronisation. Ces essais sont réalisés sur un banc d'essais dans la même huile que celle de la boîte de vitesses avec une bague de synchronisation dont la surface de portée de frottement est admise à se déplacer et à coopérer avec une surface complémentaire de portée de frottement tronconique identique à celle que l'on trouve dans la boîte de vitesses. Ici le coefficient de friction statique est mesuré lorsque la vitesse de rotation relative entre ces deux surfaces complémentaires est de 30 tours par minute.

La figure 2 montre la situation avant mise en oeuvre du procédé selon l'invention. La courbe du haut est la courbe du coefficient de friction statique et la courbe du bas celle du coefficient de friction dynamique. Au départ, c'est à dire au début de la durée de vie du véhicule dans ses premiers kilomètres, le coefficient de friction statique est plus élevé que le coefficient de friction dynamique. Au bout de 100 cycles les deux courbes se rejoignent en sorte que le déplacement de la bague est plus aisé. Dans les premiers kilomètres du véhicule automobile le déplacement de la bague 20 est moins facile.

L'invention réduit voir annule ce phénomène.

Ainsi suivant l'invention un procédé de fabrication d'une bague de synchronisation du type sus - indiqué est caractérisé en ce que la surface de portée de frottement tronconique 26 de la bague de synchronisation 20 subit en final un traitement en température.

Selon l'invention la surface de portée de frottement tronconique 26 de la bague de synchronisation 20 subit en final une élévation de température à une température spécifique pendant un temps spécifique.

La température spécifique et le temps spécifique sont déterminés en fonction des applications, notamment en fonction des paramètres, notamment de la température, relevés à la fin de la phase de synchronisation et du temps de la phase de synchronisation.

Dans une forme de réalisation la surface de portée de frottement tronconique 26 de la bague de synchronisation 20 est en final mise en prise, durant un temps spécifique et sous une pression fonction de la pression que subit par la suite en fonctionnement la dite surface de frottement lorsque qu'elle est montée dans la boîte de vitesses, avec une surface de portée complémentaire appartenant à une pièce chaude portée à une température spécifique.

La pression spécifique dépend donc des applications c'est à dire de la pression qui règne à la fin de la phase de synchronisation. La température spécifique et le temps spécifique dépendent également des applications et donc des paramètres, notamment de la température, relevés à la fin de la phase de synchronisation et du temps de la phase de synchronisation. On obtient de très bon résultat avec ce procédé.

Ainsi qu'on l'aura compris les températures spécifiques, les pressions spécifiques et les temps spécifiques dépendant des applications et donc conditions d'utilisation de la bague de synchronisation, on ne risque pas de détruire ou d'endommager la surface de portée de frottement de la bague de synchronisation. Le temps spécifique est par exemple de l'ordre de 1 à 10 secondes et la température spécifique de l'ordre de 270° à 400°.

Dans le cas de la figure 1 c'est donc la couche en matériau de frottement qui subit un traitement en température. Cette couche est constituée par un matériau de frottement, qui est avantageusement du type non tissé et est par exemple constitué par un mat de fibres imprégné d'une résine thermodurcissable qui, après une étape finale de cuisson, présente une structure poreuse à cellules communicantes. Le procédé de fabrication à sec de cette couche comporte une étape de moulage et de cuisson dans un moule sous pression. Ce matériau de frottement est par exemple du type de celui décrit dans le document WO 95/26473 et est donc constitué de manière précitée par un mat de fibres imprégné d'une résine de type thermodurcissable. Ce mat de fibres est un mat de fibres cardées, tandis que la résine du type thermodurcissable comporte un solvant polaire aqueux. Les fibres présentent une longueur au moins égale à 12 mm. La longueur moyenne des fibres est au plus égale à 120 mm. Les fibres sont choisies parmi le groupe des fibres de verre, de laine, de coton, de céramique, de polyacrylonitrile, de polyacrylonitrile préoxydées, d'aramide.

Dans un mode de réalisation des charges poudreuses sont incorporées au mat. Les dites charges poudreuses comprennent tout ou partie des éléments ou composés suivants : cuivre, laine de roche, carbone, tel que du coke et/ou fibres de carbone réduites en poudre, graphite, silicate de zirconium, sulfure de fer, alumine, caoutchouc, diatomées.

Dans un mode de réalisation des charges sous forme de pulpes sont incorporées au mat.

Lesdites pulpes comprennent tout ou partie des pulpes de verre, d'aramide, acrylique, de fibres phénoliques.

Dans une forme de réalisation la résine thermodurcissable est à base de résol.

Dans une forme de réalisation la résine thermodurcissable est additionnée de latex.

Pour plus de précisions on se reportera à cette demande WO 95/26473.

Avantageusement la couche en matériau de frottement comporte des zones de porosité différentes et contrôlées comme décrit dans le document FR-A- 2 760 504 auquel on se reportera pour plus de précisions. . La température spécifique est dans ce cas de préférence voisine de 300°.

Le procédé selon l'invention se combine bien avec ce type de matériau.

La figure 3 montre que les courbes caractéristiques des coefficients de friction ou de frottement statique et dynamique sont très proches l'une de l'autre, la courbe du coefficient de frottement de friction statique étant très légèrement au- dessus au début puis au bout seulement de 20cycles devient inférieure.

Ainsi qu'il ressort à l'évidence de la description et des dessins la bague de synchronisation est dotée d'au moins une surface de portée de frottement tronconique appartenant à une couche de matériau de frottement ,d'une part, solidaire d'un corps, et, d'autre part, adapté à travailler dans l'huile. C'est cette couche qui subit le traitement en température selon l'invention.

A la figure 1 la bague est dotée intérieurement de la surface de portée de frottement tronconique. En variante les dispositions des figures 7 à 16C du document FR A 2 751 712 sont utilisées en sorte que ladite surface de portée appartient à la périphérie interne et/ou externe de la bague de synchronisation.

La bague de synchronisation peut donc comporter deux couches de matériau de frottement subissant en final le traitement en température selon l'invention. La couche ou les couches de matériau de frottement est (sont) réalisée(s) par surmoulage, par exemple à une température de l'ordre de 180°, sur le corps annulaire métallique de la bague, la géométrie précise de la surface de portée de frottement tronconique étant obtenue par moulage en sorte qu'elle ne dépend pas de la précision de la réalisation, à la figure 1 par formage d'un flan de tôle, du corps. Cette précision dépend donc uniquement de la précision du moule et ne nécessite pas de reprise d'usinage. Bien entendu en variante il est possible de procéder à un dépôt préalable d'une résine ou d'une manière générale d'un adhésif sur le corps ou sur le matériau de frottement avant l'opération de surmoulage.

En variante cette fixation est réalisée par collage toujours à une température de l'ordre de 180°.

Ainsi la ou chaque couche de matériau de frottement subit une double cuisson, à savoir une première cuisson pour fixation de cette couche sur le corps annulaire et, après cette fixation, une deuxième cuisson à une température plus élevée pour améliorer le déplacement de la bague de synchronisation lors des premiers kilomètres du véhicule au bénéfice du confort des passagers et du conducteur.

Lors de la première cuisson, par exemple à 180°, la ou chaque couche de matériau de frottement est appliquée sous pression contre le corps 30 de forme annulaire, tandis que de préférence lors de la deuxième cuisson, à une température de l'ordre de 270° à 400° pendant un temps de 1 à 10 secondes, aucune ou une faible pression est appliquée sur la couche de matériau de frottement.

Cette deuxième cuisson à température plus élevée est en pratique une surcuisson qui permet de stabiliser la couche de matériau de frottement. En effet cela permet de libérer les gaz emprisonnés lors de la première cuisson et de terminer la cuisson. Cela permet de brûler et donc d'éliminer certains résidus.

## Revendications

1. Procédé de fabrication d'une bague de synchronisation (20) de boîte de vitesses, notamment pour véhicule automobile, dotée extérieurement et/ou intérieurement d'une surface de portée de frottement tronconique (26) appartenant à une couche de matériau de frottement, d'une part, solidaire d'un corps, et, d'autre part, adapté à travailler dans l'huile, où la surface de portée de frottement tronconique (26) du matériau de frottement de la bague de synchronisation (20) subit en final un traitement en température, avec en final une élévation de température à une température spécifique pendant un temps spécifique, et où la couche de matériau de frottement est constituée par un mat de fibres imprégné d'une résine thermodurcissable, la couche de matériau de frottement étant soumise à une étape de cuisson dans un moule sous pression pour présenter une structure poreuse à cellules communiquantes, **caractérisé en ce que** la couche de matériau de frottement est fixée pour surmoulage ou collage sur le corps (30) de la bague de synchronisation sous pression à une première température et **en ce que** cette première température est inférieure à la température finale de traitement.

2. Procédé selon la revendication 1,**caractérisé en ce que** la surface de portée de frottement tronconique (26) de la bague de synchronisation (20) en final est mise en prise, durant un temps spécifique et sous une pression spécifique fonction de la pression que subit par la suite en fonctionnement la dite surface de frottement lorsque qu'elle est montée dans la boîte de vitesses, avec une surface de portée complémentaire appartenant à une pièce chaude portée à une température spécifique.

3. Procédé selon la revendication 1 ou 2, **caractérisé en ce que** le temps spécifique dépend de la durée de la phase de synchronisation ayant lieu lors d'un changement de rapport de la boîte de vitesses.

4. Procédé selon la revendication 2 à 3, **caractérisé en ce que** la température spécifique dépend de la température à la fin de la phase de synchronisation ayant lieu lors d'un changement de rapport de la boîte de vitesses.

5. Procédé selon la revendication 2, **caractérisé en ce que** la pression spécifique dépend de la pression à la fin de la phase de synchronisation ayant lieu lors d'un changement de rapport de la boîte de vitesses.

6. Procédé selon la revendication 1, **caractérisé en ce que** la couche de matériau de frottement présente des zones de porosités différentes et contrôlées.

7. Procédé selon la revendication 1, **caractérisé en ce que** la température spécifique est de l'ordre de 270 à 400° et le temps spécifique de 1 à 10 secondes.

8. Bague de synchronisation de boîte de vitesses robotisée, notamment pour véhicule automobile, dotée extérieurement et/ou intérieurement d'une surface de portée de frottement tronconique, **caractérisée en ce qu'**elle est obtenue par le procédé de fabrication selon l'une quelconque des revendications 1 à 7, et **en ce qu'**elle est adaptée à être déplacée par un actionneur piloté par un bloc électronique de commande et de calcul.

## Patentansprüche

1. Verfahren zur Herstellung eines Synchronrings (20) eines Schaltgetriebes, insbesondere für Kraftfahrzeuge, der außen und/oder innen mit einer kegelstumpfartigen Reibauflagefläche (26) versehen ist, die zu einer Reibwerkstoffschicht gehört, die einerseits fest mit einem Körper verbunden ist und andererseits in Öl arbeiten kann, wobei die kegelstumpfartige Reibauflagefläche (26) des Reibwerkstoffs des Synchronrings (20) abschließend einer Wärmebehandlung unterzogen wird, wobei zuletzt eine Temperaturerhöhung auf eine spezifische Temperatur während einer spezifischen Zeit erfolgt und wobei die Reibwerkstoffschicht aus einer mit einem Duroplast imprägnierten Fasermatte besteht und wobei die Reibwerkstoffschicht einen Aushärtungsvorgang in einem Formwerkzeug unter Druck durchläuft, um ein poröse Struktur mit kommunizierenden Zellen aufzuweisen, **dadurch ge- kennzeichnet**, dass die Reibwerkstoffschicht durch Aufformen oder Verkleben auf dem Körper (30) des Synchronrings unter Druck bei einer ersten Temperatur befestigt wird und dass diese erste Temperatur niedriger als die abschließende Behandlungstemperatur ist.

2. Verfahren nach Anspruch 1, **dadurch gekenn- zeichnet**, dass die kegelstumpfartige Reibauflagefläche (26) des Synchronrings (20) abschließend während einer spezifischen Zeit und unter einem spezifischen Druck in Abhängigkeit von dem Druck, dem in der Folge beim Betrieb die besagte Reibfläche ausgesetzt wird, wenn sie im Schaltgetriebe eingebaut ist, mit einer komplementären Auflagefläche in Eingriff gebracht wird, die zu einem auf eine spezifische Temperatur gebrachten heißen Teil gehört.

3. Verfahren nach Anspruch 1 oder 2, **dadurch gekenn- zeichnet**, dass die spezifische Zeit von der Dauer der Synchronisierphase abhängig ist, die bei einem Gangwechsel des Schaltgetriebes stattfindet.

4. Verfahren nach Anspruch 2 bis 3, **dadurch gekenn- zeichnet,** dass die spezifische Temperatur von der Temperatur am Ende der Synchronisierphase abhängig ist, die bei einem Gangwechsel des Schaltgetriebes stattfindet.

5. Verfahren nach Anspruch 2, **dadurch gekenn- zeichnet**, dass der spezifische Druck vom Druck am Ende der Synchronisierphase abhängig ist, die bei einem Gangwechsel des Schaltgetriebes stattfindet.

6. Verfahren nach Anspruch 1, **dadurch gekenn- zeichnet**, dass die Reibwerkstoffschicht Bereiche mit unterschiedlichen und kontrollierten Porositäten aufweist.

7. Verfahren nach Anspruch 1, **dadurch gekenn- zeichnet**, dass die spezifische Temperatur in der Größenordnung von 270° bis 400° liegt und die spezifische Zeit 1 bis 10 Sekunden beträgt.

8. Synchronring eines Schaltgetriebes, insbesondere für Kraftfahrzeuge, der außen und/oder innen mit einer kegelstumpfartigen Reibauflagefläche versehen ist, **dadurch gekennzeichnet, dass** er durch das Herstellungsverfahren nach einem der Ansprüche 1 bis 7 hergestellt ist und dass er durch eine Betätigungseinrichtung verschoben werden kann, die durch eine elektronische Steuer- und Recheneinheit angesteuert wird.

## Claims

1. A method of making a gearbox synchronising ring (20), especially for a motor vehicle, having a frusto-conical internal or external friction bearing surface (26) defined on a layer of friction material, which is firstly fixed with respect to a body, and secondly, adapted to work in oil, wherein the frusto-conical friction bearing surface (26) on the friction material of the synchronising ring (20) undergoes a final heat treatment, with, as a final step, elevation of temperature to a specific temperature for a specific time, and wherein the layer of friction material consists of a mat of fibres impregnated with a thermosetting resin, the layer of friction material being subjected to a step of baking in a mould under pressure, whereby to present a porous structure with intercommunicating pores,
**characterised in that** the layer of friction material is fixed for *in situ* moulding or adhesive bonding on the body (30) of the synchronising ring under pressure and at a first temperature, and **in that** the said first temperature is lower than the final treatment temperature.

2. A method according to Claim 1, **characterised in that** the frusto-conical friction bearing surface (26) of the synchronising ring, is finally brought into engagement, for a specific time and under a specific pressure, which is a function of the pressure to which the said friction surface will be subjected in operation when it is mounted in the gearbox, with a complementary bearing surface of a hot component brought to a specific temperature.

3. A method according to Claim 1 or Claim 2, **characterised in that** the specific time depends on the duration of the synchronising phase that takes place during a gear change in the gearbox.

4. A method according to Claim 2 or Claim 3, **characterised in that** the specific temperature depends on the temperature at the end of the synchronising phase that takes place during a gear change in the gearbox.

5. A method according to Claim 2, **characterised in that** the specific pressure depends on the pressure at the end of the synchronising phase that takes place during a gear change in the gearbox.

6. A method according to Claim 1, **characterised in that** the layer of friction material has zones of different and controlled porosities.

7. A method according to claim 1, **characterised in that** the specific temperature is of the order of 270 to 400° and the specific time is from 1 to 10 seconds.

8. A synchronising ring for an automatic gearbox, in particular for a motor vehicle, having a frusto-conical internal or external friction bearing surface, **characterised in that** it is made by the method of manufacture according to any one of Claims 1 to 7, and **in that** it is adapted to be displaced by an actuator governed by an electronic control and computing unit.
